# EUROPEAN PATENT SPECIFICATION

(11) **EP 3 696 592 B1**
(45) Date of publication and mention of the grant of the patent: **03.05.2023**
(21) Application number: 19156627.2
(22) Date of filing: 12.02.2019
(51) Int. Cl.: G02B 21/36, G02B 21/00

(54) **A CONTROLLER FOR A MICROSCOPE, A CORRESPONDING METHOD AND A MICROSCOPE SYSTEM**
STEUERGERÄT FÜR EIN MIKROSKOP, ZUGEHÖRIGES VERFAHREN UND MIKROSKOPSYSTEM
ORGANE DE COMMANDE POUR MICROSCOPE, PROCÉDÉ CORRESPONDANT ET SYSTÈME DE MICROSCOPE

(43) Date of publication of application: 19.08.2020
(73) Proprietor: Leica Instruments (Singapore) Pte. Ltd., 608924 Singapore (SG)
(72) Inventor: THEMELIS, George, 88131 Lindau (DE); WILKEN, Tobias, 9000 St Gallen (CH)
(74) Representative: 2SPL Patentanwälte PartG mbB

(56) References cited:
- WO-A1-2017/049381
- US-A1- 2008 108 873
- US-A1- 2013 338 479
- US-A1- 2014 340 501
- BO SONG ET AL: "Automated wound identification system based on image segmentation and Artificial Neural Networks", BIOINFORMATICS AND BIOMEDICINE (BIBM), 2012 IEEE INTERNATIONAL CONFERENCE ON, IEEE, 4 October 2012 (2012-10-04), pages 1-4, XP032289780, DOI: 10.1109/BIBM.2012.6392633 ISBN: 978-1-4673-2559-2
- FILKO DAMIR ET AL: "Wound measurement by RGB-D camera", MACHINE VISION AND APPLICATIONS, SPRINGER VERLAG, DE, vol. 29, no. 4, 30 March 2018 (2018-03-30) , pages 633-654, XP036486604, ISSN: 0932-8092, DOI: 10.1007/S00138-018-0920-4 [retrieved on 2018-03-30]

## Description

### Technical field

Embodiments relate to controllers for a microscope and to associated methods and computer programs to control a microscope.

### Background

Surgeons may require a microscope in order to perform a surgery, for example if the parts of the human tissue to be manipulated are small and hardly visible. Likewise, if there is no direct visibility of the tissue microscopes may be put in place in order to enable the surgeon to control the use of tools within the wound to successfully perform the surgery. A frequent use case is the use of microscopes for deep wounds, i.e. for wound's that form a deep cavity within the human tissue. For example, in brain surgeries, the wound is typically deep in order to access the tissue within the brain that is to be operated on. The tissue to be operated on is typically at the bottom of the cavity and a microscope is used to enable the surgeon to monitor the tools used at the bottom of the cavity.

Document US 2008/108873 A1 discloses a system for automatically reconfiguring the magnification or zoom level of a surgical camera based upon the detection of a defined anatomical feature. The system analyses images generated by the surgical camera for the presence of defined patterns, colors, motion and the like representing a defined anatomical feature.

Document WO 2017/049381 A1 discloses an optical imaging system comprising a controller for controlling a zoom and focus actuator independently in response to received control input. The system may be capable of performing autofocus during a medical procedure.

Document US 2013/338479 A1 discloses an apparatus for scanning a field of view including a part of an organ. The apparatus obtains a spectrum at each pixel of the field of view and classifies pixels with a trained kNN-type or neuronal network classifier for identifying and classifying areas of tumor within the field of view.

Bo Song et al describes in article "Automated wound identification system based on image segmentation and Artificial Neural Networks" (Bioinformatics and Biomedicine (BIBM), 4 October 2012,pages1-4) a system using color wound photographs from patients for automatic image segmentation and wound region identification by means of Artificial Neural Networks.

Filko Damir et al describes in article "Wound measurement by RGB-D camera" (Machine Vision and Applications, Springer Verlag, DE, vol. 29, no. 4, 30 March 2018 (2018-03-30), pages 633-654) a RGB-D camera in conjunction with detecting, segmenting, reconstructing and measuring chronic wounds in 3D. The wound is detected by implementation of a nearest-neighbor approach on color histograms generated from captured images.

### Summary

Embodiments relate to a controller for a microscope, as defined by claim 1, an associated method, as defined by claim 12, and to a computer program to control a microscope, as defined by claim 13.

An embodiment relates to a controller for a microscope such as a surgical microscope. The controller is configured to receive image data representing tissue and to identify a wound using the image data. Further, the controller is configured to output a control signal for the microscope, the control signal instructing the microscope to adjust its field of view to the wound. Using such a controller for a microscope may enable an automatic adjustment of the microscope's field of view to the wound to avoid manual adjustment by the surgeon which may be slower than automated adjustment. A surgeon may so save time to a patient's benefit. Further, a surgeon may only need to concentrate on the surgery itself without any interruption to adjust the microscope, which may result in a better result of the surgery.

According to an embodiment, the controller is configured to identify the wound based on a depth profile of the tissue. Using a depth profile may enable to identify the wound reliably, for example as an area where the observed tissue forms a cavity. A cavity may be identified by tissue having a greater distance to the microscope than the tissue surrounding the cavity. According to one embodiment, the controller is configured to determine the depth profile using a stereo image of the tissue. Using a stereo image of tissue to determine the depth profile may enable a controller to adjust the field of view of the microscope without using additional hardware, for example if a stereo-microscope is controlled.

According to the preferred embodiment, the controller is configured to identify the wound based on at least two images of the tissue with different spectral content. The wound may so be identified exploiting different properties of the tissue within the wound and of the tissue surrounding the wound in the different spectral regions. Analyzing two images of the tissue with different spectral content may be performed quickly and with low computational effort to enable a fast adjustment of the field of view of the microscope to the wound.

According to the preferred embodiment, the controller is configured to determine the presence of hemoglobin based on the at least two images with different spectral content and to identify the wound based on an area where hemoglobin is present. The determination of hemoglobin by means of images with different spectral content (hemoglobin imaging) is an efficient process. Once hemoglobin has been determined within the image data, the area of the wound can be identified assuming that hemoglobin, which is part of human blood, is predominantly present in areas of the image constituting the wound.

According to the preferred embodiment, the controller is configured to determine the oxygen saturation of hemoglobin to identify the wound based on the oxygen saturation. Images with different spectral content (multispectral images) may allow to determine the oxygen saturation within hemoglobin. One may, for example, conclude that areas within an image where the oxygen saturation is determined to be above a lower limit may exhibit hemoglobin and, hence, belong to the wound. Furthermore, the additional information of the oxygen saturation of hemoglobin may be used to distinguish hemoglobin inside the wound from hemoglobin outside the wound. According to one embodiment, the controller is configured to identify the wound as an area where a polarization of light fulfills a predetermined criterion. Polarization of light may be detected easily and cheaply. Wet surfaces, as for example surfaces of tissue within a wound, may alter the polarization characteristics of reflected light differently than dry surfaces in the vicinity of the wound. Polarization characteristics of light collected by means of imaging sensors may hence be used to reliably determine the area of the wound.

According to one embodiment, the controller is configured to identify the wound as an area where the color of the tissue is within a specific color range. Color ranges can be determined within images with extremely low computational effort and delay. The tissue in the vicinity of the wound may have a different color than the area of the wound itself. The wound may, therefore, be reliably determined without the necessity to use equipment other than an imaging sensor of the microscope itself.

According to one embodiment, the controller is configured to classify the material shown by the image data and to identify the wound based on the classification. Classifying the material shown may allow for simple and reliable identification of the area of the wound. The wound may be classified as a different type of material than the rest of the material seen. For example, a material classified as skin may be assumed to be outside the wound and enclosing the wound.

According to one embodiment, the controller is configured to identify the wound using a trained artificial neuronal network. Using a trained artificial neuronal network may allow to identify the wound quickly and highly reliable using, for example, one or more of the previously described criteria in combination. Since training of the neuronal network automatically generates a set of coefficients focusing on the most efficient and reliable criteria, using a trained artificial neuronal network may result in a high accuracy of the determined shape of the wound.

According to one embodiment, the controller is configured to instruct the microscope to adjust at least one of a zoom or an orientation of the microscope. By making the microscope to adjust at least a zoom or an orientation of the microscope, the field of view of the microscope can be adjusted to match the wound. The field of view, i.e. the area on an observed object that is imaged by the microscope is depending on the zoom of the microscope optics and on the orientation of the microscope with respect to the target, e.g. the distance from the target and the relative orientation of the optical axis of the microscope and the target.

According to the preferred embodiment, the control signal is configured to adjust the field of view such that a ratio of an area of the wound and an area of the field of view fulfills a predetermined criterion. Automatically adjusting the field of view such that a certain fraction of the wound or multiple of the area of the wound is observed by the microscope's optics may allow to optimize the field of view to different surgeries or to different depths of wounds or the like.

An embodiment of a microscope system comprises an embodiment of a controller for a microscope and a microscope configured to adjust its field of view to the wound based on the control signal of the controller. Such an embodiment of a microscope system may avoid manual adjustment of the microscope by the surgeon which may be slower and less reliable than an automated adjustment. A surgeon may so only need to concentrate on the surgery itself, which may result in a better result of the surgery.

According to an embodiment, the microscope system further comprises an imaging device configured to generate the image data. A microscope system according to such an embodiment may be used to autonomously determine the required image data and adjust the field of view of the microscope.

According to an embodiment, the imaging device is one of a time-of-flight camera and a multispectral camera. Equipping the microscope system with a time-of-flight camera may allow to efficiently generate a depth profile of the wound. Similarly, using a multi-spectral camera may allow to generate images with different spectral content, enabling a controller to, for example, determine the presence of hemoglobin or the oxygen saturation of hemoglobin.

An embodiment of a method for controlling a microscope comprises receiving image data representing tissue and identifying a wound using the image data. The embodiment further comprises instructing a microscope to adjust a field of view of the microscope to the wound to allow for automatic adjustment of the microscope to a surgeon's need.

According to an embodiment of the method, the method comprises adjusting at least one of a zoom or an orientation of the microscope.

According to further embodiment of the method, the field of view is adjusted such that a ratio of an area of the wound and an area of the field of view fulfills a predetermined criterion.

An embodiment of a computer program has a program code for performing a method for controlling a microscope when the program is executed on processor. An embodiment of the computer program may so be used to supplement or upgrade an existing microscope system with the capability of automatically adjusting the field of view to the wound by, for example, upgrading the software of the microscope system.

### Short description of the Figures

Some examples of apparatuses and/or methods will be described in the following by way of example only, and with reference to the accompanying figures, in which
Fig. 1 illustrates an embodiment of a controller for a microscope;
Fig. 2 illustrates a schematic top view of a wound; and
Fig. 3 illustrates a flowchart of an embodiment of a method for controlling a microscope.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some examples thereof are shown in the figures and will subsequently be described in detail. However, this detailed description does not limit further examples to the forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

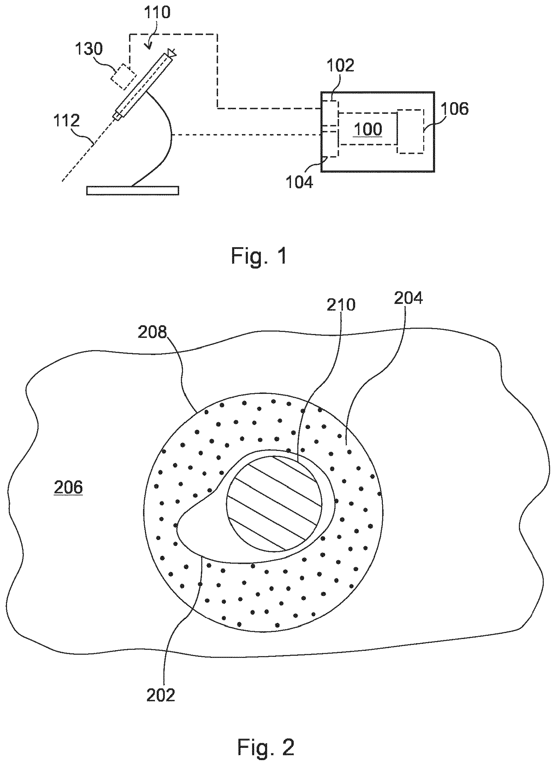

Fig. 1 illustrates an embodiment of a controller 100 for a microscope 110 such as a surgical microscope 110. Microscope 110 is illustrated in fig. 1 to supplement the description of the controller. A controller 100 and a microscope 110 together constitute an embodiment of a microscope system. In fig. 1, optional components are illustrated by dashed lines.

The controller 100 is configured to receive image data representing tissue and to identify a wound using the image data. Further, the controller 100 is configured to output a control signal for the microscope 110, the control signal instructing the microscope 110 to adjust its field of view to the wound. Using such a controller 100 for a microscope 110 may enable an automatic adjustment of the microscopes field of view to the wound to avoid manual adjustment by the surgeon which may be slower than automated adjustment, so saving time to a patient's benefit.

In order to receive the image data, the controller 100 may furthermore optionally comprise an input interface 102. For outputting the control signal to the microscope 110, the controller 100 may optionally comprise an output interface 104. Depending on the circumstances and the capabilities of the microscope 110, the image data may be generated by and received from the microscope 110 or by external imaging means connected to the input interface 102. Any interconnect between the microscope 110 and the controller 100 may be wired or wireless, the interconnect may establish a point-to-point connection or it may be routed through an intermediate network, established over a bus system, or the like. In some embodiments, the controller 100 may furthermore optionally comprise a processor 106 to perform the calculations required to identify the wound using the image data.

The field of view of the microscope 110 is an area on an observed object that is imaged by the microscope 110. Therefore, the field of view depends on the zoom of the microscope optics and on the orientation of the microscope with respect to the target. The orientation of the microscope with respect to the target may, for example, be given by the distance between the microscope and the target and the relative orientation of an optical axis 112 of the microscope and the surface of the target.

In order to discuss different possibilities to identify a wound in images or within image data, Fig. 2 schematically illustrates a top view of a wound 202 in human tissue 204. The wound 202 has an irregular shape and extends into the human tissue 204 to form a cavity therein. Fig. 2 illustrates a typical example for a surgery, where the wound 202 and the surrounding tissue 204 is covered by a sheet 206 which may, for example, be made of green or blue cloth. The sheet 206 and its circular opening 208 define the area directly accessible by the surgeon. The field of view 210 of the microscope 110 is shown to be circular in fig. 2, assuming that the optical axis 112 of microscope 110 is perpendicular to the surface of the tissue 204. The field of view 210 can be altered by adjusting the zoom of the microscope 110 or by changing the distance between the microscope 110 and the tissue 204 under observation. If the optical axis 112 of the microscope 110 is not perpendicular to the tissue 204, the field of view 210 would exhibit an elliptical shape. Nonetheless, the field of view could be adapted by changing the distance and/or the zoom.

Depending on the implementation, the wound 202 and its shape may be identified using different characteristics or criteria. According to an embodiment, for example, the wound 202 is identified by evaluating a depth profile of the tissue. The depth profile may be given by the distance between the area of the tissue 204 imaged by individual pixels of a sensor and the microscope 110. A wound 202 or cavity may be identified as parts of a depth profile having a greater distance to the microscope 110 than the tissue of the skin surrounding the cavity. For example, an average distance for all pixels of an image may be computed and all pixels having a distance greater than the average distance may be identified as pixels belonging to the wound 202. Of course arbitrary further criteria may be developed to determine a threshold used to attribute pixels of a depth profile to the wound 202.

The depth profile itself may be generated using arbitrary means. For example, the depth profile may be computed by the controller 100 itself or a depth profile may be received from an external device as part of the image data.

For example, when used together with stereoscopic microscopes, an embodiment of a controller 100 may be configured to determine the depth profile using a stereo image of the tissue 204. The depth profile may be generated using triangulation algorithms. If a controller is used together with the stereoscopic microscope, the controller may so be enabled to adjust the field of view of the microscope without using additional hardware. In the event of a controller used together with monocular microscopes, it may be enough to add another imaging sensor to generate the stereo image, which may be a comparatively cheap add on to enable for the new functionality.

In the preferred embodiment, the controller is configured to identify the wound based on at least two images of the tissue 204 with different spectral content. Different spectral content may, for example, be achieved by filtering the light reflected from the observed tissue 204 with different filters or by otherwise recording it with different spectral sensitivity. Alternatively, the tissue 204 may be illuminated with a light source providing different spectra for taking different images. For example, a first image may be taken while the tissue 204 is illuminated by a light source having a first spectral composition within the red part of the spectrum and the second image may be taken while the tissue 204 is illuminated by a light source having a second spectral composition within the red part of the spectrum. The different reflection characteristics of the tissue 204 for the different spectral contents can then be used to identify the wound 202 comparing the two images. In other words, the wound 202 may be identified by different properties of the tissue within the wound 202 and of the tissue 204 surrounding the wound 202 in the different spectral regions. The first and second spectral compositions may be such that the spectra of both images overlap or that they are separated from another. According to the circumstances, the spectral content may be given by a continuous region within the spectrum or it may be nearly monochromatic, for example if lasers or laser diodes are used to illuminate the tissue 204.

As different images with different spectral content are used, the controller 100 is configured to determine the presence of hemoglobin within the field of view 210 based on the at least two images, which is known as hemoglobin imaging. The wound 202 is identified as an area within the images where hemoglobin is present.

Similarly, the controller is configured to not only determine the presence of hemoglobin but, alternatively, also to determine the oxygen saturation of the hemoglobin present. The wound 202 is may then be determined based on the oxygen saturation, which may result in more accurate results. For example, areas where blood has been sputtered out of the wound onto the surrounding tissue 204 while the wound 202 has been created may be distinguished from areas belonging to the wound 202 in that the oxygen saturation of the sputtered blood is different than the oxygen saturation of the hemoglobin within the wound 202. One may, therefore, determine the area belonging to the wound 202 with high reliability when evaluating the oxygen saturation.

As discussed before, image data may be generated using the image sensors of the microscope. For example, mono-or stereo-images of an imaging sensor of the microscope may constitute the image data. However, image data is not restricted to optical image information but may also contain supplementary data useful to analyze the image data, for example exposure or shutter times of sensors used to generate images. Furthermore, the images contained in the image data are not necessarily only black and white or color images. For example, the image data may also contain depth-images generated by a time-of-flight sensor. In depth-images, every pixel contains a value indicating a distance between the observed object and the sensor. In the event of multi-spectral imaging to generate at least two images having different spectral content, the images may, for example, also be monochromatic images (appearing as black-and-white images) which contain an intensity information for every pixel of the image.

To generate image data other than the one obtained from the microscopes image sensors, some embodiments of a microscope system may further comprise an imaging device 130 configured to generate the image data. Fig. 1 schematically illustrates an example of an optional imaging device 130 connected to the controller 100 which enables a microscope system to determine the required image data and to adjust the field of view of the microscope 110.

According to an embodiment, the imaging device 130 is a time-of-flight camera to generate a depth image. According to another embodiment, the imaging device may be a multispectral camera to generate at least two images having different spectral content.

According to an embodiment, the controller 100 may be configured to identify the wound 202 as an area where a polarization of light fulfills a predetermined criterion. Wet surfaces, as for example surfaces of tissue within the wound 202, may alter the polarization characteristics of reflected light differently than dry surfaces in the vicinity of the wound 202. Polarization characteristics of light collected by means of imaging sensors may hence be used to determine the area of the wound. Some embodiments of microscope systems may, therefore, comprise polarization filters in order to determine the polarization of the light collected from the tissue 204. The polarization filters may, for example be external filters that can be switched into the field of view of the microscope 110 in order to use the microscope sensors to determine images having light with a predetermined polarization only. Likewise, the image sensors of the microscope 110 may include switchable polarization filters for the same purpose. Alternatively or additionally, a microscope system may also comprise a light source configured to emit polarized light to illuminate the tissue 204 with light of predetermined polarization.

According to some embodiments, the controller 100 may also be configured to identify the wound 202 as an area where the color of the tissue is within a specific color range. Color ranges can be determined within images with low computational effort and delay. The surrounding of the wound 202 may have a different color than the area of the wound 202 itself. The wound may, therefore, be reliably determined without the necessity to employ additional equipment other than an imaging sensor of the microscope itself. For example, the wound may be predominantly red, while the vicinity of the wound (the skin of the patient) may have a pale or brown color of human skin.

According to some embodiments, the controller 100 may also be configured to classify the material viewed by the image data. Classifying the material may serve to identify the wound. For example, the wound may be classified as a different type of material than the rest of the material within an image. Depending on the material, the classification or identification of the viewed material may be based on different image characteristics or on multiple image characteristics in combination. For example, a material may be classified as skin based on color information as elaborated on in the previous paragraph. Once material has been classified as skin, the wound may be identified assuming that skin is seen outside (surrounding) the wound and its cavity. For example, multispectral images may serve to distinguish biological material from non-biological material (such as for example surgical cloth used to cover a patient) to exclude non-biological material from the area where the wound is to be identified. While the previous examples serve to identify areas within an image that are not supposed to be the wound, other embodiments may use the classification to positively identify the area of the wound within the image. Based on, for example, multi-spectral images, the controller may classify the type of organic tissue viewed as belonging to a human organ the surgery is to be performed on and to identify the wound as the part of the image viewing the organ. For example, if a surgery is performed on a liver, the parts of an image identified as liver tissue may be identified as the wound to adjust the field of view on. Brain or kidney tissue may, for example, be characterized as well and used for the same purpose. Also, non-biological tissue may be used to identify the wound based on a priori-knowledge of the surgery performed. For example, surgical retractors are tools used to pull open tissue to expose deeper tissue to operate on. Surgical retractors are commonly made of non-organic material such as for example of metal or plastics. Based on characterizing parts of an image as material of a retractor, the wound may be identified to be tissue surrounded by the material of the retractor, which may, for example, be seen as a landmark outlining the boundary of the field of view.

According to one embodiment, the controller 100 is configured to identify the wound 202 using a trained artificial neuronal network. Using a trained artificial neuronal network may allow to identify the wound quickly and highly reliable using, for example, one or more of the previously described criteria in combination since training of the neuronal network automatically generates a set of coefficients focusing on the most efficient and reliable criteria. Using a trained artificial neural network may, therefore, result in a high accuracy of the determined shape of the wound. The training of the artificial neural network can be based on a large set of images of wounds of different shape in which the position of the wound has been determined by other means and possibly with human interaction before. During the training, the artificial neuronal network will automatically determine the characteristics or a combination of characteristics whose joint evaluation results in the most reliable determination of a wound.

In order to effectively adjust the field of view of the microscope 110, an embodiment of a controller 100 may be configured to instruct the microscope 110 to adjust at least one of a zoom or an orientation of the microscope 110. Embodiments of controllers may be used with different types of microscopes. For example, microscopes may be used together with the controller 100 which already comprise motorized adjustments for its zoom and its orientation. The orientation may, for example, be changed by means of a robotic or any motorized arm. In the event of such a microscope, the control signal generated by the controller 100 may instruct the already present motors within the microscope 110 to result in an adjustment of the field of view 210 of the microscope 110. However, further embodiments of controllers may also be used as an add on to existing microscopes which are only partially motorized, or which are not motorized at all. In this event, motors can be added, for example to the mechanics adjusting the field of view of the microscope. In such a setup, the control signal of the controller instructs the added motors to perform the actions required to adjust the zoom and/or the orientation of the mechanics of the microscope.

According to one embodiment, the control signal is configured to adjust the field of view 210 such that a ratio of an area of the wound 202 and an area of the field of view 210 fulfills a predetermined criterion. Automatically adjusting the field of view 210 such that a certain fraction of the wound 202 or multiple of the area of the wound 202 is observed by the microscope's optics may allow to optimize the field of view 210 to different surgeries or to different depths of wounds. For example, for deep wounds (wounds forming a deep cavity) the field of view may be adjusted to be within 40% to 90% of the area of the wound since the surgery is performed on the bottom of the cavity and, hence, the borders of the wound (which may also be called the rim of the wound) may be of minor interest. According to further embodiments, the field of view may be adjusted to cover 60% to 80% or 65% to 75% of the area of the wound. A larger field of view of, for example, 90% of the area of the wound may be chosen to get an overview of the wound 202 to navigate to the surgical spot where the tissue is to be operated on. Likewise, a smaller field of view 210 of, for example, 50% of the area of the wound 202 may be chosen to view the surgical spot during the ongoing surgery with sufficiently large magnification. In some embodiments, it may also be of interest to view an area larger than the area of the wound 202 to get an overview including the shape of the rim of the wound 202, for example at the beginning of a surgery. Therefore, the field of view 210 may also be adjusted to be within 90% and 120% of the area of the wound. According to some embodiments, the desired ratio of the area of the wound 202 and the area of the field of view 210 can be chosen by the surgeon to alter the ratio during the surgery to always work with the field of view fitting best to the present task to be accomplished by the surgeon. For example, the desired ratio may be input by operating a keyboard, a jog dial or by speech recognition enabling the surgeon to keep both hands at his tools while changing the ratio.

While some embodiments use the ratio between the two-dimensional area of the field of view and the two-dimensional area of the wound as the predetermined criterion to automatically adjust the field of view, other embodiments may likewise use a ratio between an arbitrary linear extension across the two-dimensional field of view and across the two-dimensional area of the wound as said criterion. In a two-dimensional coordinate system given by an x-axis and a y-axis, for example, the field of view 210 may also be adjusted such that a ratio of an extension of the wound 202 and an extension of the field of view 210 along the x-axis or along the y-axis (or any axis in between) fulfills the chosen predetermined criterion.

An embodiment of a microscope system comprises an embodiment of a controller 100 for a microscope 110 and a microscope 110 configured to adjust its field of view 210 to the wound 202 based on the control signal of the controller 100. Such an embodiment of a microscope system may avoid manual adjustment of the microscope 110 by the surgeon which may be slower and less reliable than an automated adjustment. Hence, one may save time of the surgery to the patient's benefit. Likewise, a surgeon may be enabled to only concentrate on the surgery itself, which may result in a better result of the surgery.

According to an embodiment, the microscope system further comprises an imaging device 130 configured to generate the image data. A microscope system according to such an embodiment may be used to autonomously determine the required image data to adjust the field of view of the microscope 110. To this end, image data other than the one derivable by means of the microscope 110 itself can be used to eventually more reliably or accurately determine the area of the wound 202.

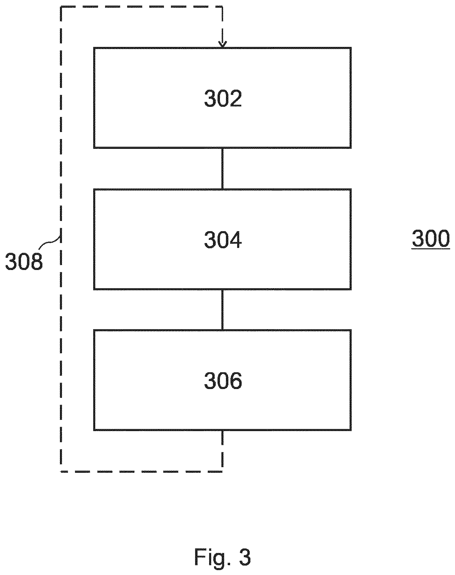

Fig. 3 illustrates a flowchart of an embodiment of a method for controlling a microscope.

The method comprises receiving image data 302, the image data representing tissue. The method further comprises identifying a wound 304 using the image data and instructing a microscope to adjust a field of view 306 of the microscope to the wound.

As elaborated on before, at least one of a zoom or an orientation of the microscope may be controlled to adjust the field of view of the microscope to the wound and the field of view 210 may be adjusted such that a ratio of an area of the wound 202 and an area of the field of view 210 fulfills a predetermined criterion.

According to some examples, the field of view 210 of the microscope 110 is initially adjusted according to the method illustrated in fig. 3. According to further examples, the field of view 210 may be continuously readjusted during a surgery. As illustrated being optional in fig. 3, receiving image data 302, identifying the wound 304 and adjusting the field of view 306 can be continuously performed in a loop 308 according to some embodiments. Continuously readjusting the field of view 210 may automatically consider obstacles entering the field of view 210, such as for example tools used during the surgery and occasionally entering the field of view 210. A permanent readjustment may enable the surgeon to concentrate on the surgery and to avoid situations where the surgeon is no longer able to see the tissue he is operating on.

Summarizing the above in other words, for deep surgical cavities, for example, one may assume that that the field of view is not needed outside the surgical cavity. The previously described embodiments propose an automatic (initial) adjustment of the FOV/zoom, optimized for the surgical cavity, reducing the need for manual adjustment from the surgeon. Automatic adjustment can be achieved by detecting the surgical cavity. Detecting the surgical cavity may be achieved by a combination of image analysis of color and/or multispectral imaging data, e.g. haemoglobin imaging to identify the "wound", depth sensing (e.g. via stereo camera or Time-of-flight, TOF), and Artificial Intelligence (AI). The zoom (FOV) would be adjusted accordingly so that the surgical cavity and the FOV can have a predetermined overlapping. For example, the FOV could cover a predetermined percentage between 50% and 90% of the surgical cavity, or the surgical cavity could cover a predetermined percentage between 70% and 90% of the FOV.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### List of reference Signs

- 100: controller
- 102: input interface
- 104: output interface
- 106: processor
- 110: microscope
- 112: optical axis
- 130: imaging device
- 202: wound
- 204: tissue
- 206: cloth
- 208: opening
- 210: field of view
- 302: receiving image data representing tissue
- 304: identifying a wound
- 306: instructing a microscope to adjust field of view
- 308: loop

## Claims

1. A controller (100) for a microscope (110), the controller (100) configured to:
receive image data representing tissue (204);
identify a wound (202) using the image data; wherein identifying the wound (202) is based on at least two images of the tissue (204) with different spectral content;
determine the presence of hemoglobin based on the at least two images and identify the wound (202) based on an area where hemoglobin is present or determine the oxygen saturation of the hemoglobin and identify the wound (202) based on the oxygen saturation; and
output a control signal for the microscope (110), the control signal instructing the microscope (110) to adjust its field of view (210) to the wound (202).

2. The controller (100) of claim 1, wherein the controller (100) is configured to identify the wound (202) based on a depth profile of the tissue (204).

3. The controller (100) of claim 2, wherein the controller (100) is configured to determine the depth profile using a stereo image of the tissue (204).

4. The controller (100) of one of the preceding claims, wherein the controller (100) is configured to identify the wound (202) as an area where a polarization of light fulfills a predetermined criterion.

5. The controller (100) of one of the preceding claims, wherein the controller (100) is configured to identify the wound (202) as an area where the color of the tissue (204) is within a specific color range.

6. The controller (100) of one of the preceding claims, wherein the controller (100) is configured to classify material shown by the image data; and to identify the wound (202) based on the classification.

7. The controller (100) of one of the preceding claims, wherein the controller (100) is configured to identify the wound (202) using a trained artificial neuronal network.

8. The controller (100) of one of the preceding claims, wherein the controller (100) is configured to instruct the microscope (110) to adjust at least one of a zoom or an orientation of the microscope (110).

9. The controller (100) of one of the preceding claims, wherein the control signal is configured to adjust the field of view (210) such that a ratio of an area of the wound (202) and an area of the field of view (210) fulfills a predetermined criterion.

10. A microscope system, comprising:
a controller (100) according to one of claims 1 to 9; and
a microscope (110) configured to adjust its field of view (210) to the wound (202) based on the control signal.

11. The microscope system of claim 10, further comprising:
an imaging device (130) configured to generate the image data.

12. A method for controlling a microscope, comprising:
receiving image data (302) representing tissue;
identifying a wound (304) using the image data; wherein identifying the wound (202) is based on at least two images of the tissue (204) with different spectral content;
determining the presence of hemoglobin based on the at least two images and identifying the wound (202) based on an area where hemoglobin is present or determining the oxygen saturation of the hemoglobin and identifying the wound (202) based on the oxygen saturation; and
instructing a microscope to adjust a field of view (306) of the microscope to the wound.

13. A computer program having a program code for performing a method according to claim 12 when the program is executed on a processor.

## Patentansprüche

1. Eine Steuerung (100) für ein Mikroskop (110), wobei die Steuerung (100) ausgebildet ist:
Bilddaten, die ein Gewebe (204) darstellen, zu empfangen;
unter Verwendung der Bilddaten eine Wunde (202) zu identifizieren, wobei das Identifizieren der Wunde (202) auf zumindest zwei Bildern des Gewebes (204) mit unterschiedlichem Spektralgehalt basiert;
das Vorhandensein von Hämoglobin basierend auf den zumindest zwei Bildern zu bestimmen und die Wunde (202) basierend auf einem Bereich, in dem Hämoglobin vorhanden ist, zu identifizieren oder die Sauerstoffsättigung des Hämoglobins zu bestimmen und die Wunde (202) basierend auf der Sauerstoffsättigung zu identifizieren, und
ein Steuersignal für das Mikroskop (110) auszugeben, wobei das Steuersignal das Mikroskop (110) anweist, sein Sichtfeld (210) auf die Wunde (202) einzustellen.

2. Die Steuerung (100) gemäß Anspruch 1, wobei die Steuerung (100) ausgebildet ist, die Wunde (202) basierend auf einem Tiefenprofil des Gewebes (204) zu identifizieren.

3. Die Steuerung (100) gemäß Anspruch 2, wobei die Steuerung (100) ausgebildet ist, das Tiefenprofil unter Verwendung eines Stereobildes des Gewebes (204) zu bestimmen.

4. Die Steuerung (100) gemäß einem der vorhergehenden Ansprüche, wobei die Steuerung (100) ausgebildet ist, die Wunde (202) als einen Bereich zu identifizieren, in dem eine Polarisation von Licht ein vorbestimmtes Kriterium erfüllt.

5. Die Steuerung (100) gemäß einem der vorhergehenden Ansprüche, wobei die Steuerung (100) ausgebildet ist, die Wunde (202) als einen Bereich zu identifizieren, in dem die Farbe des Gewebes (204) innerhalb eines bestimmten Farbbereichs ist.

6. Die Steuerung (100) gemäß einem der vorhergehenden Ansprüche, wobei die Steuerung (100) ausgebildet ist, von den Bilddaten gezeigtes Material zu klassifizieren; und die Wunde (202) basierend auf der Klassifizierung zu identifizieren.

7. Die Steuerung (100) gemäß einem der vorhergehenden Ansprüche, wobei die Steuerung (100) ausgebildet ist, die Wunde (202) unter Verwendung eines trainierten künstlichen neuronalen Netzwerks zu identifizieren.

8. Die Steuerung (100) gemäß einem der vorhergehenden Ansprüche, wobei die Steuerung (100) ausgebildet ist, das Mikroskop (110) anzuweisen, zumindest eines von einem Zoom oder einer Ausrichtung des Mikroskops (110) einzustellen.

9. Die Steuerung (100) gemäß einem der vorhergehenden Ansprüche, wobei das Steuersignal ausgebildet ist, das Sichtfeld (210) derart einzustellen, dass ein Verhältnis eines Bereichs der Wunde (202) und eines Bereichs des Sichtfeldes (210) ein vorbestimmtes Kriterium erfüllt.

10. Ein Mikroskopsystem, umfassend:
eine Steuerung (100) gemäß einem der Ansprüche 1 bis 9; und
ein Mikroskop (110), das ausgebildet ist, sein Sichtfeld (210) basierend auf dem Steuersignal auf die Wunde (202) einzustellen.

11. Das Mikroskopsystem gemäß Anspruch 10, ferner umfassend:
eine Bildgebungsvorrichtung (130), die ausgebildet ist, die Bilddaten zu erzeugen.

12. Ein Verfahren zum Steuern eines Mikroskops, umfassend:
Empfangen von Bilddaten (302), die ein Gewebe darstellen;
Identifizieren einer Wunde (202) unter Verwendung der Bilddaten; wobei das Identifizieren der Wunde (202) auf zumindest zwei Bildern des Gewebes (204) mit unterschiedlichem Spektralgehalt basiert;
Bestimmen des Vorhandenseins von Hämoglobin basierend auf den zumindest zwei Bildern und Identifizieren der Wunde (202) basierend auf einem Bereich, in dem Hämoglobin vorhanden ist, oder Bestimmen der Sauerstoffsättigung des Hämoglobins und Identifizieren der Wunde (202) basierend auf der Sauerstoffsättigung; und
Anweisen eines Mikroskops, ein Sichtfeld (306) des Mikroskops auf die Wunde einzustellen.

13. Ein Computerprogramm mit einem Programmcode zum Durchführen eines Verfahrens gemäß Anspruch 12, wenn das Programm auf einem Prozessor ausgeführt wird.

## Revendications

1. Contrôleur (100) pour un microscope (110), le contrôleur (100) configuré pour :
recevoir des données d'image représentant un tissu (204) ;
identifier une plaie (202) en utilisant les données d'image ; le fait d'identifier la plaie (202) étant basé sur au moins deux images du tissu (204) à contenu spectral différent ;
déterminer la présence d'hémoglobine sur la base des au moins deux images et identifier la plaie (202) sur la base d'une zone où l'hémoglobine est présente, ou déterminer la saturation en oxygène de l'hémoglobine et identifier la plaie (202) sur la base de la saturation en oxygène ; et
émettre un signal de commande pour le microscope (110), le signal de commande ordonnant au microscope (110) d'ajuster son champ de vision (210) à la plaie (202).

2. Contrôleur (100) selon la revendication 1, dans lequel le contrôleur (100) est configuré pour identifier la plaie (202) sur la base d'un profil de profondeur du tissu (204).

3. Contrôleur (100) selon la revendication 2, dans lequel le contrôleur (100) est configuré pour déterminer le profil de profondeur en utilisant une image stéréo du tissu (204).

4. Contrôleur (100) selon l'une des revendications précédentes, dans lequel le contrôleur (100) est configuré pour identifier la plaie (202) comme une zone où une polarisation de la lumière répond à un critère prédéterminé.

5. Contrôleur (100) selon l'une des revendications précédentes, dans lequel le contrôleur (100) est configuré pour identifier la plaie (202) comme une zone où la couleur du tissu (204) se situe dans une gamme de couleurs spécifique.

6. Contrôleur (100) selon l'une des revendications précédentes, dans lequel le contrôleur (100) est configuré pour classer la matière montrée par les données d'image ; et pour identifier la plaie (202) sur la base de la classification.

7. Contrôleur (100) selon l'une des revendications précédentes, dans lequel le contrôleur (100) est configuré pour identifier la plaie (202) en utilisant un réseau neuronal artificiel entraîné.

8. Contrôleur (100) selon l'une des revendications précédentes, dans lequel le contrôleur (100) est configuré pour ordonner au microscope (110) d'ajuster au moins un d'un zoom ou d'une orientation du microscope (110).

9. Contrôleur (100) selon l'une des revendications précédentes, dans lequel le signal de commande est configuré pour ajuster le champ de vision (210) de sorte qu'un rapport d'une zone de la plaie (202) et d'une zone du champ de vision (210) réponde à un critère prédéterminé.

10. Système de microscope comprenant :
un contrôleur (100) selon l'une des revendications 1 à 9 ; et
un microscope (110) configuré pour ajuster son champ de vision (210) à la plaie (202) sur la base d'un signal de commande.

11. Système de microscope selon la revendication 10, comprenant en outre :
un dispositif d'imagerie (130) configuré pour générer les données d'image.

12. Procédé de commande d'un microscope, comprenant le fait de :
recevoir des données d'image (302) représentant un tissu ;
identifier une plaie (304) en utilisant les données d'image ; le fait d'identifier la plaie (202) étant basé sur au moins deux images du tissu (204) à contenu spectral différent ;
déterminer la présence d'hémoglobine sur la base des au moins deux images et le fait d'identifier la plaie (202) sur la base d'une zone où l'hémoglobine est présente ou le fait de déterminer la saturation en oxygène de l'hémoglobine et le fait d'identifier la plaie (202) sur la base de la saturation en oxygène ; et
ordonner à un microscope d'ajuster un champ de vision (306) du microscope à la plaie.

13. Programme d'ordinateur avec un code de programme pour effectuer un procédé selon la revendication 12 lorsque le programme est exécuté sur un processeur.
